Europäisches Patentamt

European Patent Office

Office européen des brevets

(19)

(11) Numéro de publication : **0 169 842**
**B1**

(12) FASCICULE DE BREVET EUROPÉEN

(45) Date de publication du fascicule du brevet :
07.09.88

(21) Numéro de dépôt : 84900958.4

(22) Date de dépôt : 13.03.84

(86) Numéro de dépôt international :
PCT/BE 84/00008

(87) Numéro de publication internationale :
WO/8403690 (27.09.84 Gazette 84/23)

(51) Int. Cl.⁴ : **C 01 B 25/228**, C 01 F 11/46

(54) PROCEDE DE PREPARATION D'ACIDE PHOSPHORIQUE ET DE SULFATE DE CALCIUM.

(30) Priorité : 25.03.83 LU 84713

(43) Date de publication de la demande :
05.02.86 Bulletin 86/06

(45) Mention de la délivrance du brevet :
07.09.88 Bulletin 88/36

(84) Etats contractants désignés :
AT BE DE FR GB NL SE

(56) Documents cités :
FR-A- 1 534 672
FR-A- 2 320 903
FR-A- 2 409 230
NL-A- 7 909 057
Chemical Abstracts, vol. 80, no. 16, 22 April 1974
(Columbus, Ohio, US), p. 128, abstract no. 85239j

(73) Titulaire : **Prayon Développement Société anonyme**
**rue Joseph Wauters, 144**
**B-4130 Engis (BE)**

(72) Inventeur : **DAVISTER, Armand, Laurent**
**Quai de la Boverie, 98/091**
**B-4000 Liège (BE)**
Inventeur : **DUBREUCQ, André, Robert**
**Rue Basse Marquet, 105**
**B-4240 Saint-Georges (BE)**
Inventeur : **THIRION, Francis, Arthur**
**Rue Sainte Walburge, 12**
**B-4000 Liège (BE)**

(74) Mandataire : **Callewaert, Jean et al**
**Bureau Gevers S.A. rue de Livourne 7 bte 1**
**B-1050 Bruxelles (BE)**

EP 0 169 842 B1

Jouve, 18, rue St-Denis, 75001 Paris, France

## Description

La présente invention est relative à un procédé de préparation d'acide phosphorique et de sulfate de calcium notamment en hémihydrate α de sulfate de calcium, anhydrite II de sulfate de calcium ou un mélange de ces deux types de sulfate de calcium, tel que défini dans le préambule de la revendication 1.

Le BE-A-683.739 se rapporte à un procédé suivant lequel on précipite d'abord le sulfate de calcium sous forme dihydrate qu'on transforme, après avoir soutiré l'acide phosphorique produit, par augmentation de température et d'acidité, en hémihydrate.

Ce procédé connu présente l'avantage par rapport au procédé dit « dihydrate », suivant lequel le sulfate de calcium est directement séparé sous forme de gypse non utilisable, que le sulfate de calcium ainsi obtenu sous la forme de hémihydrate contient moins de 0,15 % de $P_2O_5$ sur matière sèche à 150 °C, ce qui entraîne un rendement d'extraction global nettement supérieur à celui du procédé dihydrate. De plus, une simple neutralisation à la chaux de la faible acidité libre contenue dans cet hémihydrate le rend utilisable tel quel, pour l'industrie du plâtre, et comme régulateur de prise dans l'industrie du ciment.

En effet, approximativement cinq tonnes de gypse sont produites pour chaque tonne de $P_2O_5$ dans l'acide et pour les procédés aboutissant à un gypse non commercialisable, cette énorme quantité de gypse doit être évacuée et entreposée dans un endroit adéquat, ce qui entraîne, par conséquent, des dépenses importantes pour couvrir les frais de transport, d'entreposage et de contrôle de la pollution.

De plus, en ce qui concerne la possibilité d'utilisation de d'hémihydrate résiduaire produit suivant le procédé décrit dans le BE-A 683.739, d'autres avantages complémentaires peuvent encore être cités.

L'hémihydrate produit par le procédé décrit dans le brevet belge susdit contient environ 6,2 % d'eau de cristallisation, alors que le dihydrate produit par d'autres procédés, tels que le procédé dit « dihydrate » ; ou résultant d'une opération d'épuration contient 20 % d'eau de cristallisation. De ceci résulte une diminution des coûts de transport et, lors de la calcination, une diminution de la quantité d'eau à évaporer d'environ 0,166 tonne par tonne de sulfate de calcium, ce qui entraîne donc une économie d'énergie appréciable, notamment dans l'industrie du plâtre et les cimenteries, qui requièrent la calcination de sulfate de calcium jusqu'à l'état hémihydrate ou anhydrite.

Un second avantage du procédé hémihydrate suivant ce brevet belge réside dans le fait que par la réhydratation naturelle au détriment de son humidité d'accompagnement, l'hémihydrate, qui contient normalement à la production environ 20 à 25 % d'eau totale est complètement réhydraté après un séjour d'environ trois semaines sur une aire de stockage sans aucune intervention extérieure et ne contient, à ce moment, plus que 5 % d'humidité environ.

Par rapport au gypse produit par le procédé dihydrate, par exemple, ou résultant d'une opération d'épuration, ce produit réhydraté est sec et, par conséquent, très manipulable, ce qui réduit d'autant les frais de conditionnement et de dosage.

Enfin, un troisième avantage du procédé suivant ce brevet belge par rapport au procédé dihydrate réside dans le fait que l'hémihydrate produit se présente sous la forme cristalline α, contrairement à l'hémihydrate produit par calcination de gypse naturel ou de phospho-gypse produit par les autres procédés connus, qui se présente sous la forme cristalline β. Cette particularité est très avantageuse car l'hémihydrate α possède des propriétés mécaniques très supérieures à l'hémihydrate β. L'hémihydrate β ne peut être transformé en hémihydrate α que moyennant un processus coûteux basé sur un traitement discontinu en autoclave.

Toutefois, suivant le procédé décrit dans ce brevet belge, il est impossible de produire directement un acide phosphorique à un titre élevé en $P_2O_5$.

En effet, l'influence néfaste, sur la forme des cristaux de gypse, du titre en $P_2O_5$ de la phase liquide limite ce dernier à 35 % de $P_2O_5$ environ et, comme la plupart des utilisations courantes de l'acide phosphorique requièrent 42 à 54 % de $P_2O_5$, il est nécessaire de concentrer l'acide obtenu à cette teneur.

La production d'une tonne de $P_2O_5$ dans de l'acide à 54 % de $P_2O_5$ à partir de 35 % de $P_2O_5$ nécessite l'évaporation d'une tonne d'eau et on peut ainsi apprécier l'intérêt de procédés qui produiraient directement de l'acide phosphorique à haut titre en $P_2O_5$, à la fois sur le plan de la diminution de la dépense en énergie, que sur le plan de la simplification et de la diminution des investissements.

Le document NL-A 79 09 057 concerne un procédé en trois étapes dans lequel le temps de réaction de la troisième étape est extrêmement réduit par suite de l'utilisation d'un filtre à bande, de sorte que l'on peut s'attendre à ce que la recristallisation de l'hémihydrate α en dihydrate ne sera que très partielle.

Ainsi, une partie importante des impuretés et du $P_2O_5$ resteront enfermés dans cet hémihydrate α non recristallisé lors du passage vers la troisième étape.

Par ailleurs, dans cette troisième étape on ne contrôle pas la teneur en $P_2O_5$ mais uniquement le rapport acide phosphorique-acide sulfurique, ce qui est donc un contrôle relativement peu souple et efficace.

Un des résultats en est que le procédé suivant le document NL-A-7909057 n'est applicable que sur un nombre relativement réduit de types de phosphates.

Les documents FR-A 1 534 672 et FR-A-2 320 903 concernent un procédé de préparation en deux étapes suivant lequel on obtient d'abord après la première étape du sulfate de calcium sous forme d'hémidrate α qui est ensuite recristallisé en dihydrate dans la deuxième étape.

Un des buts essentiels de la présente invention est de proposer un nouveau procédé de fabrication d'acide phosphorique permettant, d'une part, de produire un acide phosphorique à haut titre en $P_2O_5$, tout en conservant les avantages du procédé décrit dans le brevet belge précité en ce qui concerne les propriétés du sulfate de calcium comme sous-produit et, d'autre part, de traiter pratiquement n'importe quel type de phosphate grâce à sa souplesse de réglage et de contrôle parfait des paramètres de recristallisation dans les différentes étapes, toujours avec un maximum de rendement.

A cet effet, le procédé suivant l'invention, est caractérisé par le fait que le phosphate est soumis, au cours de la première étape, aux conditions de réaction suivantes : une température de l'ordre de 70 à 100 °C, de préférence de 80 à 90 °C, un acide phosphorique avec une concentration en $P_2O_5$ comprise entre 38 et 50 %, de préférence 43 à 45 %, en présence d'acide sulfurique à une concentration comprise entre 0,25 et 2,5 %, avec une teneur en matières solides dans la bouillie d'hémihydrate α entre 20 et 38 %, de préférence 26 à 32 %, et un temps de réaction entre 2 et 4 heures, ces conditions étant alors modifiées au cours de la deuxième étape (12) en maintenant la température entre 40 et 80 °C, de préférence entre 50 et 70 °C, la concentration du $P_2O_5$ dans la phase liquide entre 15 et 34 %, de préférence 20 à 32 % et de l'acide sulfurique entre 0,5 et 17,5 %, de préférence 4 à 14 %, avec une teneur en matières solides dans la bouillie de dihydrate comprise entre 22 et 62 %, plus particulièrement entre 26 et 58 % et de préférence entre 45 et 58 % et un temps de réaction compris entre 4 et 16 heures, le dihydrate ainsi obtenu étant alors, dans la troisième étape (18), mis en contact avec de l'acide sulfurique concentré (19) et une autre partie encore de l'acide phosphorique (9) soutiré à la première étape, en maintenant la bouillie ainsi formée en agitation, pour transformer le dihydrate en hémihydrate α, en anhydrite II ou en un mélange d'hémihydrate α et d'anhydrite II, à une température de 60 à 100 °C, de préférence 70 à 98 °C, en maintenant dans la phase liquide une concentration en $P_2O_5$ de 15 à 34 %, de préférence 20 à 30 %, et en acide sulfurique de 7 à 25 %, et une teneur en matières solides comprise entre 20 et 34 %, de préférence entre 24 et 30 %, pendant un temps de réaction de 0,5 à 3 heures, l'hémihydrate α, l'anhydrite II ou leur mélange, obtenu après cette troisième étape, étant alors soumis à une opération de séparation (22) de la phase liquide, qui est recyclée vers au moins une des étapes précédentes.

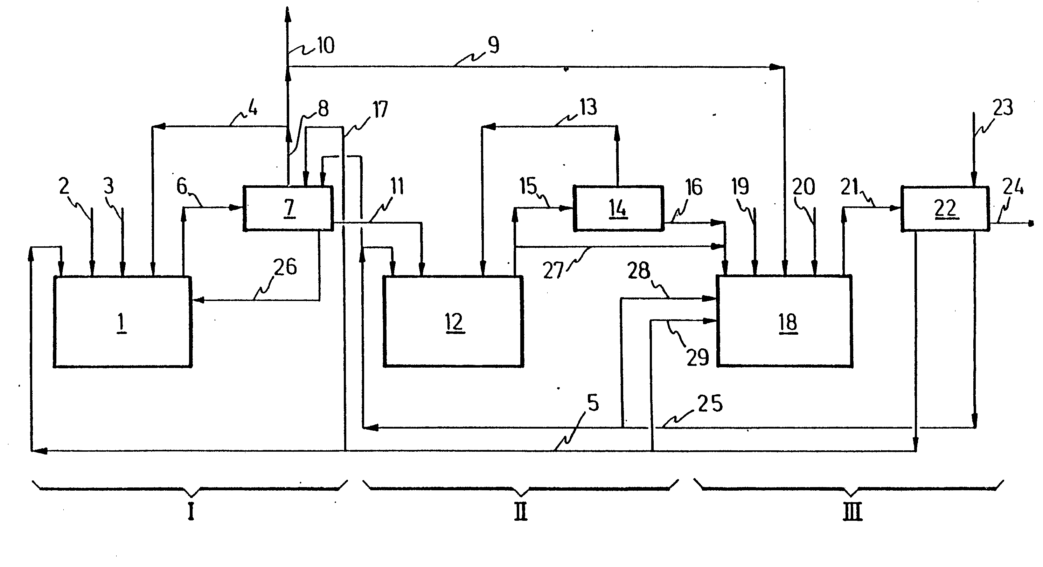

D'autres détails et particularités de l'invention ressortiront de la description de quelques modes de réalisation particuliers du procédé de l'invention, donnée ci-après à titre d'exemples non limitatifs, avec référence à la figure annexée qui montre schématiquement une installation pour la mise en œuvre de ce procédé.

Suivant l'invention, on procède en au moins trois étapes successives, dans chacune desquelles on obtient une forme cristalline déterminée du sulfate de calcium.

Dans une première étape, on fait réagir du phosphate naturel de calcium, de l'acide sulfurique et de l'acide phosphorique recyclé, de manière à obtenir un acide phosphorique de production à haut titre en $P_2O_5$ notamment de 38 à 50 %, et de préférence 43 à 45 %, dans des conditions telles que le sulfate de calcium cristallise sous forme hémihydrate α, cet hémihydrate étant relativement impur en ce qui concerne la teneur en $P_2O_5$, par suite de la haute concentration du milieu en acide phosphorique.

L'acide de production est séparé à ce stade, par filtration ou décantation par exemple, et le gâteau ou la bouillie d'hémihydrate résultant de cette opération de séparation est recristallisé en dihydrate, dans une deuxième étape par modification des conditions de température et d'acidité. La pulpe de dihydrate ainsi obtenue est alors éventuellement soumise à une nouvelle opération de séparation permettant de fournir un acide phosphorique dilué pouvant servir au maintien du pourcentage de solides de cette deuxième étape.

Dans une troisième étape, par une nouvelle modification des conditions de température et d'acidité, le gâteau ou la bouillie de dihydrate provenant de l'opération de séparation dans la deuxième étape est transformée à nouveau en hémihydrate α, en anhydrite II ou en un mélange de ces deux types de sulfate de calcium, et une fois de plus soumise à une opération de séparation, de préférence par filtration. Le gâteau hémihydrate, anhydrite II ou hémihydrate α + anhydrite II formé dans le filtre est ensuite lavé à l'eau et constitue le sous-produit final. Le filtrat est recyclé à la première étape et les liqueurs de lavage sont recyclées à la deuxième étape et/ou à la première étape.

Plus particulièrement, les conditions de réaction, dans la première étape, pour que le sulfate de calcium cristallise sous forme hémihydrate α, sont les suivantes : une température de 70 à 100 °C, de préférence 80 à 90 °C, une concentration en $P_2O_5$ dans la phase liquide de 38 à 50 %, de préférence 43 à 45 %, et une concentration en $H_2SO_4$ dans la phase liquide de 0,25 à 2,5 %, de préférence de 1 à 1,7 %.

Ensuite, les conditions pour obtenir la conversion de l'hémihydrate en dihydrate dans la deuxième étape s'établissent comme suit : une température de 40 à 80 °C, de préférence 50 à 70 °C, une concentration en $P_2O_5$ dans la phase liquide de 15 à 34 %, de préférence 20 à 32 %, et une concentration en $H_2SO_4$ dans la phase liquide de 0,5 à 17,5 %, de préférence 4 à 14 %.

Enfin, dans la troisième étape, les conditions de conversion pour obtenir la recristallisation du dihydrate en hémihydrate α, en anhydrite II ou en un mélange de ces types de sulfate de calcium, sont les suivantes : une température de 60 à 100 °C, de préférence 70 à 98 °C, une concentration en $P_2O_5$ dans la phase liquide de 15 à 34 %, de préférence 20 à 30 %, et une concentration en $H_2SO_4$ dans la phase liquide de 7 à 25 %.

Par un choix judicieux des conditions de travail dans les limites de température, de concentration en $H_2SO_4$ ou de concentration en $P_2O_5$ données ci-dessus, il a avantageusement été constaté que l'on peut obtenir, dans cette troisième étape, soit de l'hémihydrate α relativement pur, soit de l'anhydrite II relativement pur, soit un mélange d'hémihydrate α et d'anhydrite et ceci dans tous les rapports.

Ainsi, en vue d'obtenir dans la troisième étape essentiellement du sulfate de calcium hémihydraté, on maintient les conditions de conversion suivantes : une température de 78 à 100 °C, une concentration en $P_2O_5$ dans la phase liquide de 22 à 34 %, et une concentration en $H_2SO_4$ dans la phase liquide de 7 à 14 %.

Si par contre on désire essentiellement obtenir, dans cette troisième étape, de l'anhydrite II, on maintient les conditions de conversion suivantes : une température de 60 à 75 %, une concentration en $P_2O_5$ dans la phase liquide de 15 à 18 % et une concentration en $H_2SO_4$ dans la phase liquide de 16 à 25 %.

Si, enfin, on vise à obtenir, dans la troisième étape un mélange dans certains rapports bien déterminé de l'hémihydrate et de l'anhydrite II, on maintient les conditions de conversion suivantes : une température de 74 à 78 °C, une concentration en $P_2O_5$ dans la phase liquide de 18 à 22 % et une concentration en $H_2SO_4$ dans la phase liquide de 14 à 17 %.

Afin d'obtenir un déroulement continu et aussi homogène que possible des différentes réactions, dans une forme particulière de l'objet de l'invention, la teneur en matières solides dans la bouillie du sulfate de calcium obtenue après la séparation de la phase liquide est maintenue dans la première étape à 20 à 38 %, de préférence 26 à 32 %, dans la deuxième étape à 22 à 62 %, de préférence 26 à 58 % ; et dans la troisième étape à 20 à 34 %, de préférence de 24 à 30 %.

Par ailleurs, le volume des différents réacteurs utilisés et le débit relatif à travers ces derniers dans les trois étapes doit être fonction de la vitesse de la réaction de recristallisation de l'hémihydrate en dihydrate et de dihydrate en hémihydrate et/ou en anhydrite dans les conditions de température et de concentrations données.

Ainsi, il a été constaté qu'un temps de réaction dans la première étape compris entre 2 et 4 heures, un temps de recristallisation de l'hémihydrate en dihydrate dans la deuxième étape compris entre 4 et 16 heures, et un temps de recristallisation du dihydrate en hémihydrate et/ou anhydrite dans la troisième étape compris entre 1 et 3 heures donnent des résultats satisfaisants.

La figure annexée montre schématiquement une installation pour la mise en œuvre du procédé tel que décrit ci-dessus.

Cette installation comprend un réacteur hémihydrate 1, qui est constitué soit par une cuve unique, soit par un ensemble de cuves de réaction, pourvu d'un système de mélange, d'agitation, de circulation et de refroidissement appropriés non représentés.

Le phosphate et l'acide sulfurique sont alimentés dans le réacteur 1, comme indiqué par les flèches respectivement 2 et 3. Ce réacteur 1 est relié, par l'intermédiaire d'une conduite 6, à un séparateur 7, tel qu'un filtre ou un décanteur, dans lequel a lieu la séparation entre la phase liquide et l'hémihydrate formé.

La phase liquide formant l'acide phosphorique de production est évacuée de ce séparateur 7 par une conduite 8, sur laquelle est branchée une conduite 4 permettant de recycler une partie de l'acide produit vers le réacteur 1, de manière à contrôler le pourcentage de solides dans celui-ci.

Suivant l'invention, le séparateur 7 peut être éventuellement lavé à l'aide de liquides produits ultérieurement au filtre 22 et prélevé par les conduites 17 et 25. Le résultat de ce lavage est recyclé au réacteur 1 par la conduite 26.

Le gâteau ou la bouillie d'hémihydrate formé dans le séparateur 7 est dirigé, comme indiqué par une ligne 11, vers une cuve de conversion en dihydrate 12 où a lieu la transformation de l'hémihydrate en dihydrate. Le dihydrate ainsi formé peut soit être introduit en totalité dans un séparateur 14, comme indiqué par une ligne 15, soit être conduit directement dans une cuve de conversion, comme indiqué par une ligne 27, soit être partiellement introduit dans le séparateur 14 et partiellement conduit directement vers la cuve 18. Si la bouillie de dihydrate est introduite en totalité ou en partie dans le séparateur 14, la phase liquide est recyclée de ce dernier par une conduite 13 vers le réacteur 12 dans le but de contrôler la teneur en solides dans celui-ci.

Le gâteau ou la bouillie de dihydrate sortant du séparateur 14 est introduit dans la cuve de conversion 18, comme indiqué par une ligne 16. Dans cette cuve 18, on ajoute en outre de l'acide sulfurique concentré indiqué par la flèche 19, ainsi que de la vapeur comme indiqué par la flèche 20, pour y augmenter la température.

Enfin, les teneurs en $P_2O_5$ et en solides dans la phase liquide de la cuve 18 sont éventuellement ajustées par le recyclage d'acide phosphorique concentré provenant de la première étape, comme indiqué par une conduite 9 et par le recyclage du filtre par la conduite 29.

Ensuite, la bouillie d'hémihydrate α, d'anhydrite II ou d'un mélange de ces deux types de sulfate de calcium est amenée par une conduite 21 vers un filtre 22 où a lieu une nouvelle séparation liquide-solide.

Le gâteau d'hémihydrate α, d'anhydrite II ou d'un mélange de ces deux types de sulfate de calcium est alors lavé à l'aide d'eau chaude, comme indiqué par la flèche 23, et évacué du filtre 22, comme indiqué par la flèche 24.

Le filtrat est recyclé par une conduite 5 vers le réacteur 1 dans le but de maintenir le titre en $P_2O_5$ dans ce réacteur. Le gâteau d'hémihydrate $\alpha$, d'anhydrite II ou d'un mélange de ces deux types de sulfate de calcium est, avant d'être évacué, comme indiqué par la flèche 24, soumis à un lavage et le filtrat de lavage peut être introduit dans les cuves de conversion 12 et 18 et éventuellement dans le séparateur 7, comme indiqué par la conduite 25.

Ci-après sont donnés quelques exemples concrets du procédé suivant l'invention appliqués dans l'installation telle que montrée à la figure annexée.

Exemple 1

Un mélange de phosphates Kola-Togo dans la proportion 1/1 a été alimenté dans le réacteur 1 avec l'acide sulfurique concentré à 99 %, le pourcentage en solide dans le réacteur 1 a été contrôlé par le recyclage d'acide produit, comme indiqué par la ligne 4, tandis que le titre en $P_2O_5$ de la phase liquide a été maintenu par recyclage du filtrat 5 provenant de la troisième étape. Les conditions de réaction dans ce réacteur étaient les suivantes : température 85 °C ; pourcentage de solides dans la bouillie de réaction : 25 % ; pourcentage de $P_2O_5$ dans la phase liquide : 43 % ; pourcentage de $H_2SO_4$ dans la phase liquide : 1,2 %. Le sulfate de calcium a précipité sous forme d'hémihydrate $CaSO_4 \cdot 1/2\ H_2O$ en des cristaux maclés de bonne filtrabilité. Le rendement de l'attaque était de 96,5 % et l'hémihydrate contenait environ 1 % de $P_2O_5$ total dans la phase solide, calculé sur sec à 250 °C.

Le gâteau d'hémihydrate dans le séparateur 7 contenait environ 25 % de liquide d'accompagnement et a été envoyé dans la cuve de conversion en dihydrate 12 où la température a été abaissée à 60 °C par refroidissement, le pourcentage de solides a été ramené à 35 % par recyclage des liqueurs provenant des appareils de séparation 14 et 22 et le pourcentage de $P_2O_5$ dans la phase liquide a été ajusté à 21,5 % par recyclage de liqueurs provenant de la troisième étape.

Dans le réacteur 18, les conditions de température, de concentration en $H_2SO_4$ et de concentration en $P_2O_5$ ont successivement été réglées pour obtenir dans un premier test essentiellement de l'hémihydrate $\alpha$, dans un deuxième test essentiellement de l'anhydrite II et dans un troisième test un mélange déterminé d'hémihydrate $\alpha$ et d'anhydrite II.

Dans le premier test, le dihydrate a été reconverti en hémihydrate par une élévation de la température jusqu'à 85 °C et une augmentation de la concentration d'acide sulfurique jusqu'à 9,5 %, une teneur en solides de 30 % et une teneur en $P_2O_5$ dans la phase liquide de 30,7 %.

L'hémihydrate obtenu à la sortie de la cuve 18 ne contenait plus que 0,15 % de $P_2O_5$, ce qui présentait un rendement d'extraction global du $P_2O_5$ à partir du phosphate de 99,5 %.

Grâce à la taille et à la forme favorable des cristaux, l'humidité du gâteau était de 19 % et le rendement de filtration en $P_2O_5$ était de 99,8 %.

Dans le deuxième test, le dihydrate a été converti en anhydrite II par une élévation de la température jusqu'à 73 °C et une augmentation de la concentration d'acide sulfurique jusqu'à 16 %, une teneur en solide de 28 % et une teneur en $P_2O_5$ dans la phase liquide de 18 %.

L'anhydrite obtenu à la sortie de la cuve 18 ne contenait plus que 0,25 % de $P_2O_5$, ce qui présentait un rendement d'extraction global du $P_2O_5$ à partir du phosphate de 99 %.

L'humidité du gâteau était de 25 % et le rendement de filtration en $P_2O_5$ était de 99,2 %.

Dans le troisième test, le dihydrate a été converti en sulfate de chaux constitué de 80 % d'hémihydrate $\alpha$ et de 20 % d'anhydrite II. A cet effet, la température a été élevée à 80 °C, la concentration en acide sulfurique a été réglée à 13 %, tandis que la teneur en $P_2O_5$ a été maintenue à 27 %.

A titre de variante, la teneur en $P_2O_5$ a été adaptée à 23 %, la concentration en acide sulfurique à 15 % et la température a été fixée à 78 °C. Ces conditions ont permis d'obtenir du sulfate de chaux constitué de 40 % d'hémihydrate $\alpha$ et 60 % d'anhydrite II.

Exemple 2.

Un mélange de phosphates Kola-Maroc dans la proportion 70 parties de phosphates Kola pour 30 parties de phosphates Maroc sont mises en réaction dans le réacteur 1 dans les conditions opératoires suivantes : température : 94 °C ; teneur en solides dans la bouillie de réaction : 28 % ; teneur de $P_2\text{-}SO_5$ dans la phase liquide : 45 % et teneur en $H_2SO_4$ dans la phase liquide : 1 %. Le rendement d'attaque était de 94 %, ce qui signifiait que l'hémihydrate contenait environ 1,8 % de $P_2O_5$ dans la phase solide, suivant une analyse basée sur le poids de solide sec à 250 °C.

Dans la deuxième étape, l'hémihydrate a été converti en dihydrate par abaissement de la température à 60 °C ; les autres conditions opératoires étaient : teneur en solide dans la bouillie : 50 %, et teneur de $P_2O_5$ dans la phase liquide : 22 %.

Dans la troisième étape, également trois tests successifs ont été effectués, c'est-à-dire dans la cuve 18 on a préparé successivement de l'hémihydrate $\alpha$, de l'anhydrite II et une série de mélanges de ces deux formes cristallines.

Ainsi, dans un premier test, le dihydrate est reconverti en hémihydrate par élévation de la température jusqu'à 82 °C et la teneur en acide sulfurique a été augmentée jusqu'à 8,5 %. Les autres conditions opératoires étaient : teneur en matière solide dans la bouillie : 24 % et teneur de $P_2O_5$ dans la phase liquide de 24 %.

Dans ce test, l'hémihydrate déchargé au filtre 22 se présentait également sous forme cristalline $\alpha$ avec une teneur en $P_2O_5$ de 0,13 % (sur base d'un produit séché à 250 °C) et avec une teneur en humidité du gâteau de 20,2 %.

Dans le deuxième test, le dihydrate a été converti en anhydrite II par une élévation de la température jusqu'à 75 °C et une augmentation de la concentration en acide sulfurique jusqu'à 19 %, une teneur en solides de 26 % et une teneur en $P_2O_5$ dans la phase liquide de 17 %. L'anhydrite II obtenu ne contenait plus que 0,28 % de $P_2O_5$, ce qui correspond à un rendement d'extraction global du $P_2O_5$ à partir du phosphate de 98,8 %. L'humidité du gâteau était de 24 % et le rendement de filtration en $P_2O_5$ était de 99 %.

Dans le troisième test, en faisant varier le titre en $P_2O_5$ dans les limites précitées, il a été possible de convertir le dihydrate en un mélange d'hémihydrate et d'anhydrite dont le rapport variait entre quelques pourcents jusqu'à plus de 90 %.

**Exemple 3.**

Du phosphate Maroc 70-72 BPL est soumis dans le réacteur 1 aux conditions opératoires suivantes : température 80 °C, teneur en solide dans la bouillie de réaction : 24 %, teneur en $P_2O_5$ dans la phase liquide : 43 % et teneur en $H_2SO_4$ dans la phase liquide : 1 %. Le rendement de l'attaque était de 96,5 %, ce qui signifiait que l'hémihydrate contenait environ 1 % de $P_2O_5$ dans la phase solide suivant une analyse basée sur le poids de solides secs à 250 °C.

Dans la deuxième étape, l'hémihydrate a été converti en dihydrate par abaissement de la température à 60 °C ; les autres conditions opératoires étaient : teneur en solide dans la bouillie : 52 %, et teneur en $P_2O_5$ dans la phase liquide : 18 %.

Comme dans les deux exemples précédents, dans la troisième étape les conditions ont été adaptées pour obtenir séparément de l'hémihydrate α, de l'anhydrite II et de mélanges de ces deux formes cristallines.

Dans le premier test, le dihydrate a été converti en hémihydrate α à une température de 80 °C et une teneur en acide sulfurique de 12 %. La teneur en solides dans la bouillie était de 26 % et la teneur en $P_2O_5$ dans la phase liquide était de 26 %. L'hémihydrate déchargé au filtre 22 se présentait sous forme d'hémihydrate α et contenait 0,15 % de $P_2O_5$ (sur base du produit séché à 250 °C), la teneur en humidité du gâteau étant de 23 %.

Dans le deuxième test, le dihydrate a été converti en anhydrite II. Les conditions étaient les suivantes :
— température : 72 °C
— concentration $H_2SO_4$ : 20 %
— teneur en $P_2O_5$ : 16 % (phase liquide)
— teneur en solides : 28 %.

L'anhydrite obtenu contenait 0,90 % de $P_2O_5$, le rendement d'extraction global du $P_2O_5$ était de 98,6 %.

L'humidité du gâteau était de 26 % et le rendement de filtration en $P_2O_5$ était de 99 %.

Dans le troisième test, en maintenant la teneur en $P_2O_5$ entre 18 et 23 %, on a obtenu un mélange d'hémihydrate et d'anhydrite de sulfate de calcium dont la teneur en anhydrite variait entre 20 et 70 %.

**Exemple 4.**

Du phosphate Floride 75 BPL est mis en réaction dans le réacteur 1 dans lequel les conditions opératoires étaient les suivantes : température : 85 °C ; teneur en solides dans la bouillie 26 % ; teneur en $P_2O_5$ dans la phase liquide 45 % ; teneur en $H_2SO_4$ dans la phase liquide 1 %.

La teneur en $P_2O_5$ de l'hémihydrate, sur base du solide sec à 250 °C, était de 0,9 % et de ce fait, le rendement d'attaque était proche de 97 %.

Dans la deuxième étape, la température de conversion se situait à 65 °C, la teneur en solides dans la pulpe était de 50 % et la teneur en $P_2O_5$ dans la phase liquide était de 20 %.

Dans la troisième phase, pour la préparation d'hémihydrate α, la température de conversion se situait à 85 °C, la teneur en acide sulfurique était de 15 %, la teneur en $P_2O_5$ dans la phase liquide était de 24 %.

L'hémihydrate α déchargé au filtre 22 contenait 0,12 % de $P_2O_5$ (sur base solide sec à 250 °C) et le gâteau contenait environ 22 % d'humidité.

Pour la préparation d'anhydrite II, la température se situait à 72 °C, la teneur en $H_2SO_4$ à 21 %, la teneur en solides dans la bouillie était de 26 % et la teneur en $P_2O_5$ dans la phase liquide était de 18 %. L'anhydrite déchargé contenait 0,30 % de $P_2O_5$ (basé sur solide séché à 250 °C) et le gâteau contenait environ 26,5 % d'humidité.

Enfin, un mélange de ces deux formes cristallines a été obtenu en variant les conditions opératoires entre ces limites.

Des exemples précités, il résulte qu'il est très possible de modifier favorablement les formes cristallines de l'hémihydrate et du dihydrate en agissant sur les paramètres opératoires tels que température, acidité totale (acide phosphorique + acide sulfurique), rapport acidité phosphorique/acidité sulfurique, teneur en matières solides, temps de séjour dans les cuves de réaction et de conversion.

On a aussi trouvé que l'on peut modifier favorablement la cristallisation tant des hémihydrates, du dihydrate que de l'anhydrite en corrigeant le déséquilibre éventuel du phosphate par des additions de silice active et/ou de composés contenant de l'alumine, tels que l'hydroxyde d'aluminium ou de kaolin, en un ou plusieurs point(s) du circuit. Ainsi, le procédé suivant l'invention peut être appliqué, avec sensiblement les mêmes résultats, au traitement de phosphates d'origine différente de ceux utilisés dans les exemples précités.

Il y a encore lieu de remarquer que l'acide phosphorique concentré, produit par le procédé de l'invention, provient d'une cuve de réaction où le temps de séjour est tel que les différentes impuretés provenant du phosphate de départ, sont à l'équilibre en ce qui concerne leur solubilité dans les conditions d'acidité et température considérée.

Par conséquent, on observera, lors du stockage de cet acide, nettement moins de précipitations ultérieures que dans le cas d'un acide produit par le procédé conventionnel dit « dihydrate », où l'équilibre des impuretés dans l'acide à 27 à 30 % de $P_2O_5$ est rompu lors de la concentration, par élévation de la température, jusqu'à 45 à 54 % de $P_2O_5$.

Comme le réacteur 1, les cuves 12 et 18 pourraient bien entendu également être constituées d'un bac unique ou d'un ensemble de bacs reliés entre-eux.

Il est à noter que dans le description donnée ci-dessus le sulfate de calcium dihydraté, le sulfate de calcium hémihydraté, le sulfate de calcium anhydrite II ou encore le dihydrate de sulfate de calcium, l'hémihydrate de sulfate de calcium et l'anhydrite de sulfate de calcium, ont généralement été dénommés respectivement « dihydrate », « hémihydrate », « anhydrite II ».

## Revendications

1. Procédé continu de préparation d'acide phosphorique et de sulfate de calcium, suivant lequel on soumet du phosphate de calcium à une attaque par un mélange d'acides sulfurique et phosphorique, avec formation de sulfate de calcium, comprenant au moins trois étapes de cristallisation successives suivant lesquels, dans une première étape (1), au cours de laquelle le phosphate (2) est soumis à une réaction avec ledit mélange d'acides sulfurique et phosphorique dans des conditions telles à produire de l'hémihydrate α, une partie de l'acide phosphorique de production étant soutiré, une autre partie étant recyclée vers la première étape, l'hémihydrate α étant séparé et épuré par recristallisation dans une deuxième étape (12) en dihydrate, ce dihydrate étant ensuite à nouveau recristallisé au cours d'une troisième étape, ce procédé étant caractérisé en ce que le phosphate est soumis, au cours de la première étape, aux conditions de réaction suivantes : une température de l'ordre de 70 à 100 °C, de préférence de 80 à 90 °C, un acide phosphorique avec une concentration en $P_2O_5$ comprise entre 38 et 50 %, de préférence 43 à 45 %, en présence d'acide sulfurique à une concentration comprise entre 0,25 et 2,5 %, avec une teneur en matières solides dans la bouillie d'hémihydrate α entre 20 et 38 %, de préférence 26 à 32 %, et un temps de réaction entre 2 et 4 heures, ces conditions étant alors modifiées au cours de la deuxième étape (12) en maintenant la température entre 40 et 80 °C, de préférence entre 50 et 70 °C, la concentration du $P_2O_5$ dans la phase liquide entre 15 et 34 %, de préférence 20 à 32 % et de l'acide sulfurique entre 0,5 et 17,5 %, de préférence 4 à 14 %, avec une teneur en matières solides dans la bouillie de dihydrate comprise entre 22 et 62 %, plus particulièrement entre 26 et 58 % et de préférence entre 45 et 58 % et un temps de réaction compris entre 4 et 16 heures, le dihydrate ainsi obtenu étant alors, dans la troisième étape (18), mis en contact avec de l'acide sulfurique concentré (19) et une autre partie encore de l'acide phosphorique (9) soutiré à la première étape, en maintenant la bouillie ainsi formée en agitation, pour transformer le dihydrate en hémihydrate α, en anhydrite II ou en un mélange d'hémihydrate α et d'anhydrite II, à une température de 60 à 100 °C, de préférence 70 à 98 °C, en maintenant dans la phase liquide une concentration en $P_2O_5$ de 15 à 34 %, de préférence 20 à 30 %, et en acide sulfurique de 7 à 25 %, et une teneur en matières solides comprise entre 20 et 34 %, de préférence entre 24 et 30 %, pendant un temps de réaction de 0,5 à 3 heures, l'hémihydrate α, l'anhydrite II ou leur mélange, obtenu après cette troisième étape, étant alors soumis à une opération de séparation (22) de la phase liquide, qui est recyclée vers au moins une des étapes précédentes.

2. (revendication 2 antérieure modifiée) Procédé suivant revendication 1, caractérisé en ce que l'on règle les conditions de réaction dans les diverses étapes d'une manière telle à obtenir du sulfate de calcium hémidrate α produit contenant sur base sec à 250 °C de 5,8 à 6,1 % $H_2O$ cristal et cristallisé dans le système hexagonal et du sulfate de calcium anhydrite II produit contenant sur base sec à 280 °C de 0,2 à 0,6 % d'$H_2O$ cristal et cristallisé dans le système orthorombique.

3. (revendication 4 antérieure modifiée) Procédé suivant l'une ou l'autre des revendications 1 à 2, caractérisé en ce que, en vue d'obtenir dans la troisième étape (18) essentiellement du sulfate de calcium hémihydraté, on maintient les conditions de conversion suivantes : une température de 78 à 100 °C, une concentration en $P_2O_5$ dans la phase liquide de 22 à 34 %, et une concentration $H_2SO_4$ dans la phase liquide de 7 à 14 %.

4. (revendication antérieure 5) Procédé suivant l'une ou l'autre des revendications 1 et 2, caractérisé en ce que, en vue d'obtenir dans la troisième étape (18) essentiellement de l'anhydrite II de sulfate de calcium, on maintient les conditions de conversion suivantes : une température de 60 à 75 °C, une concentration en $P_2O_5$ dans la phase liquide de 15 à 18 % et une concentration en $H_2SO_4$ dans la phase liquide de 16 à 25 %.

5. (revendication antérieure 6) Procédé suivant l'une ou l'autre des revendications 1 et 2, caractérisé en ce que, en vue d'obtenir dans la troisième étape (18) un mélange d'anhydrite II et d'hémihydrate de sulfate de calcium, on maintient les conditions de conversion suivantes : une température de 74 à 78 °C, une concentration en $P_2O_5$ dans la phase liquide de 18 à 22 % et une concentration en $H_2SO_4$ dans la phase liquide de 14 à 17 %.

6. (revendication antérieure 7) Procédé suivant l'une quelconque des revendications 1 à 5, caractérisé en ce que l'on contrôle la forme et la taille de cristaux de sulfate de calcium en corrigeant le déséquilibre éventuel du phosphate par des additions de silice active et/ou de composés contenant de l'alumine, tels que l'hydroxyde d'aluminium ou de kaolin, en un ou plusieurs points du circuit.

## Claims

1. Continuous process for the preparation of phosphoric acid and calcium sulphate, according to which calcium phosphate is subjected to an attack by a mixture of sulphuric and phosphoric acids, with formation of calcium sulphate, comprising at least three successive crystallisation stages according to which, in a first stage (1), during which the phosphate (2) is subjected to a reaction with the said mixture of sulphuric and phosphoric acids under such conditions as to produce a hemihydrate, a part of the phosphoric acid produced being drawn off, another part being cycled back to the first stage, the $\alpha$ hemihydrate being separated and purified by recrystallisation in a second stage (12) as dihydrate, this dihydrate being then recrystallised anew during a third stage, this process being characterised in that, during the first stage, the phosphate is subjected to the following reaction conditions : a temperature of from 70 to 100 °C, preferably from 80 to 90 °C, a phosphoric acid with a $P_2O_5$ concentration of between 38 and 50 %, preferably 43 to 45 %, in the presence of sulphuric acid at a concentration of between 0.25 and 2.5 %, with a solids content of between 20 and 38 %, preferably 26 to 32 %, in the $\alpha$ hemihydrate mixture, and a reaction time of between 2 and 4 hours, these conditions being then modified during the second stage (12) by maintaining the temperature between 40 and 80 °C, preferably between 50 and 70 °C, the $P_2O_5$ concentration in the liquid phase between 15 and 34 %, preferably 20 to 32 %, and the sulphuric acid concentration between 0.5 and 17.5 %, preferably 4 to 14 %, with a solids content of between 22 and 62 %, more particularly between 26 and 58 % and preferably between 45 and 58 %, in the dihydrate mixture, and a reaction time of between 4 and 16 hours, the dihydrate thus obtained being then, in the third stage (18), brought into contact with concentrated sulphuric acid (19) and yet another part of the phosporic acid (9) drawn off from the first stage, while the mixture thus formed is kept agitated, to convert the dihydrate into $\alpha$ hemihydrate, into anhydrite II or into a mixture of $\alpha$ hemihydrate and of anhydrite II, at a temperature of 60 to 100 °C, preferably 70 to 98 °C, while maintaining in the liquid phase a $P_2O_5$ concentration of 15 to 34 %, preferably 20 to 30 %, and a sulphuric acid concentration of 7 to 25 %, and a solids content of between 20 and 34 %, preferably between 24 and 30 %, for a reaction time of 0.5 to 3 hours, the $\alpha$ hemihydrate, the anhydrite II or their mixture, obtained after this third stage, being then subjected to an operation of separation (22) of the liquid phase, which is cycled back to at least one of the preceding stages.

2. Process according to claim 1, characterised in that the reaction conditions in the various stages are regulated so as to obtain calcium sulphate $\alpha$ hemihydrate containing, on a dry basis at 250 °C, from 5.8 to 6.1 % crystal $H_2O$, and crystallised in the hexagonal system and calcium sulphate anhydrite II product containing, on a dry basis at 280 °C, from 0.2 to 0.6 % of crystal $H_2O$, and crystallised in the orthorhombic system.

3. Process according to either of claims 1 to 2, characterised in that, in order to obtain essentially calcium sulphate hemihydrate in the third stage (18), the following conversion conditions are maintained : a temperature of 78 to 100 °C, a $P_2O_5$ concentration in the liquid phase of 22 to 34 % and a $H_2SO_4$ concentration in the liquid phase of 7 to 14 %.

4. Process according to either of claims 1 and 2, characterised in that, in order to obtain essentially calcium sulphate anhydrite II in the third stage (18), the following conversion conditions are maintained : a temperature of 60 to 75 °C, a $P_2O_5$ concentration in the liquid phase of 15 to 18 % and an $H_2SO_4$ concentration in the liquid phase of 16 to 25 %.

5. Process according to either of claims 1 and 2, characterised in that, in order to obtain a mixture of anhydrite II and of calcium sulphate hemihydrate in the third stage (18), the following conversion conditions are maintained : a temperature of 74 to 78 °C, a $P_2O_5$ concentration in the liquid phase of 18 to 22 % and a $H_2SO_4$ concentration in the liquid phase of 14 to 17 %.

6. Process according to any one of claims 1 to 5, characterised in that the form and size of crystals of calcium sulphate are controlled by correcting any imbalance in the phosphate by additions of active silica and/or of compounds containing alumina, such as aluminium hydroxide or kaolin, at one or more points in the circuit.

## Patentansprüche

1. Kontinuierliches Verfahren zur Herstellung von Phosphorsäure und Calciumsulfat, bei dem man Calciumphosphat einem Angriff durch eine Mischung aus Schwefelsäure und Phosphorsäure aussetzt, wodurch Calciumsulfat entsteht, welches Verfahren wenigstens drei aufeinanderfolgende Kristallisationsschritte umfaßt, nämlich einen ersten Schritt (1), in dessen Verlauf das Phosphat (2) einer Reaktion mit der genannten Mischung aus Schwefelsäure und Phosphorsäure unter solchen Bedingungen unterworfen wird, daß ein Hemihydrat $\alpha$ entsteht, ein Teil der Phosphorsäure abgezogen und ein anderer Teil in die erste Stufe zurückgeführt wird, in einer zweiten Stufe (12) das Hemihydrat $\alpha$ abgetrennt und durch Umkristallisation in das Dihydrat gereinigt wird, und das Dihydrat dann in einer dritten Stufe erneut umkristallisiert wird, dadurch gekennzeichnet, daß das Phosphat im Verlauf der ersten Stufe den folgenden Reaktionsbedingungen unterworfen wird : einer Temperatur in der Größenordnung von 70 bis 100 °C, vorzugsweise von 80 bis 90 °C, einer Phosphorsäure mit einem

Gehalt an $P_2O_5$ zwischen 38 und 50 %, vorzugsweise zwischen 34 und 45 %, in Gegenwart von Schwefelsäure mit einer Konzentration zwischen 0,25 und 2,5 %, bei einem Gehalt an Feststoffen in der Aufschlämmung des Halbhydrats α zwischen 20 und 38 %, vorzugsweise zwischen 26 und 32 %, und einer Reaktionsdauer von 2 bis 4 Stunden, welche Bedingungen dann im Verlauf der zweiten Stufe (12) modifiziert werden, indem die Temperatur zwischen 40 und 80 °C, vorzugsweise zwischen 50 und 70 °C, die Konzentration von $P_2O_5$ in der flüssigen Phase zwischen 15 und 34 %, vorzugsweise zwischen 20 und 32 % und der Schwefelsäure zwischen 0,5 und 17,5 %, vorzugsweise zwischen 4 und 14 % gehalten wird, bei einem Gehalt an Feststoffen in der Aufschlämmung des Dihydrats zwischen 22 und 62 % und insbesondere zwischen 26 und 58 %, vorzugsweise zwischen 45 und 58 %, und einer Reaktionsdauer von 4 bis 16 Stunden, wonach das so erhaltene Dihydrat in der dritten Stufe (18) mit konzentrierter Schwefelsäure (19) und noch einem weiteren Teil der aus der ersten Stufe abgezogenen Phosphorsäure (9) in Kontakt gebracht und die so gebildete Aufschlämmung in Bewegung gehalten wird, um das Dihydrat in das Hemihydrat α, in das Anhydrit II oder in eine Mischung aus Hemihydrat α und Anhydrit II zu transformieren, und zwar bei einer Temperatur von 60 bis 100 °C, vorzugsweisevon 70 bis 98 °C, während in der flüssigen Phase eine Konzentration an $P_2O_5$ von 15 bis 34 %, vorzugsweise von 20 bis 30 %, an Schwefelsäure von 7 bis 25 % und ein Feststoffgehalt zwischen 20 und 34 %, vorzugsweise zwischen 24 und 30 % für die Dauer einer Reaktionszeit von 0,5 bis 3 Stunden aufrechterhalten wird, worauf das Hemihydrat α, das Anhydrid II oder eine Mischung dieser nach der dritten Stufe erhaltenen Stoffe einer Operation (22) der Abtrennung von der flüssigen Phase unterworfen wird, die ihrerseits zu wenigstens einer der vorhergehenden Stufen zurückgeführt wird.

2. (Modifizierter früherer Anspruch 2) Verfahren nach Anspruch 1, dadurch gekennzeichnet, daß die Reaktionsbedingungen in den verschiedenen Stufen derart eingestellt werden, daß man als Produkt ein Calciumsulfat-Hemihydrat α erhält, das auf Trockenbasis bei 250 °C einen Gehalt von 5,8 bis 6,1 % Kristallwasser aufweist und im hexagonalen System kristallisiert ist, wogegen das als Produkt erhaltene Anhydrit II auf Trockenbasis bei 280 °C einen Gehalt von 0,2 bis 0,6 % Kristallwasser hat und im orthorhombischen System kristallisiert ist.

3. (Modifizierter früherer Anspruch 4) Verfahren nach dem einen oder dem anderen der Ansprüche 1 bis 2, dadurch gekennzeichnet, daß man, um in der dritten Stufe (18) im wesentlichen Calciumsulfat-Hemihydrat zu erhalten, die folgenden Umwandlungsbedingungen einhält : eine Temperatur von 78 bis 100 °C, eine Konzentration von $P_2O_5$ in der flüssigen Phase von 22 bis 34 % und eine Konzentration von $H_2SO_4$ in der flüssigen Phase von 7 bis 14 %.

4. (Früherer Anspruch 5) Verfahren nach dem einen oder dem anderen der Ansprüche 1 und 2, dadurch gekennzeichnet, daß man, um in der dritten Stufe (18) im wesentlichen Calciumsulfat-Anhydrit II zu erhalten, die folgenden Umwandlungsbedingungen einhält : eine Temperatur von 60 bis 75 °C, eine Konzentration von $P_2O_5$ in der flüssigen Phase von 15 bis 18 % und eine Konzentration von $H_2SO_4$ in der flüssigen Phase von 16 bis 25 %.

5. (Früherer Anspruch 6) Verfahren nach dem einen oder dem anderen der Ansprüche 1 und 2, dadurch gekennzeichnet, daß man, um in der dritten Stufe (18) eine Mischung des Anhydrits II und des Hemihydrats von Calciumsulfat zu erhalten, die folgenden Umwandlungsbedingungen einhält : eine Temperatur von 74 bis 78 °C, eine Konzentration von $P_2O_5$ in der flüssigen Phase von 18 bis 22 % und eine Konzentration von $H_2SO_4$ in der flüssigen Phase von 14 bis 17 %.

6. (Früherer Anspruch 7) Verfahren nach einem beliebigen der Ansprüche 1 bis 5, dadurch gekennzeichnet, daß man die Form und Größe der Calciumsulfat-Kristalle dadurch steuert, daß man ein eventuelles Ungleichgewicht des Phosphats durch die Zugabe von aktiver Kieserde und/oder von Tonerde enthaltenden Verbindungen, wie z. B. Aluminiumhydroxid oder Kaolin, an ein oder mehreren Stellen des Verfahrensablaufs korrigiert.